# EUROPEAN PATENT SPECIFICATION

(11) **EP 0 879 267 B1**
(45) Date of publication and mention of the grant of the patent: **09.05.2001**
(21) Application number: 97902510.3
(22) Date of filing: 10.02.1997
(51) Int. Cl.: C09D 9/00

(54) **PAINT REMOVER**
MITTEL ZUR LACKENTFERNUNG
DECAPANT DE PEINTURE

(30) Priority: 08.02.1996 GB 9602593
(43) Date of publication of application: 25.11.1998
(73) Proprietor: Dasic International Limited, Romsey, Hampshire S051 7YD (GB)
(72) Inventor: BELK, John, Leonard, Near Salisbury,Wiltshire SP5 3SA (GB); ZIELENIEWSKI, Andrzej, Tadeusz, Salisbury,Wiltshire SP5 3BD (GB)
(74) Representative: Curtis, Philip Anthony
(86) International application number: GB9700359
(87) International publication number: WO9729158

(56) References cited:
- EP-A- 0 497 130
- US-A- 3 355 385
- US-A- 5 454 985

## Description

The present invention relates to a paint remover formulation, and its use.

Paint removers are used to remove paints from a wide variety of items, including buildings, cars, aeroplanes, etc. The paint that is removed may be in many different forms, eg an emulsion paint, a gloss paint, a primer, etc.

Traditionally, paint remover formulations have been based on chlorinated solvents such as methylene chloride. However, because of health and environmental concerns, it is now considered desirable to avoid the use of these solvents. Benzyl formate can be used instead of chlorinated solvents, but it is much more expensive. EP-B-0497130 describes a paint remover formulation containing benzyl formate, benzyl alcohol and formic acid. This is made by mixing benzyl alcohol with formic acid, the alcohol then reacting in situ with the formic acid to provide the benzyl formate.

Although this formulation is less expensive than the use of benzyl formate per se, it still has certain disadvantages. In particular, the formulation has a very pungent smell, because of the presence of formic acid. This is particularly a problem when a large amount of the paint remover is used in a confined space, as can occur, for example, when the formulation is used to strip paint from aircraft in hangars.

The use of hydrogen peroxide in paint removing formulations has been described in US-A-3355385. Most of the compositions described in this specification include methylene chloride. One composition consisted of hydrogen peroxide, phenol and water. Although this composition was quite effective for removing paints, we have found it to be very unstable, which means that the formulation has an unacceptably short shelf life.

Hydrogen peroxide is a difficult material with which to work. It is commercially available in aqueous solutions containing up to about 60 wt% hydrogen peroxide, but this concentration can be very hazardous. We have found that the effectiveness of hydrogen peroxide as a paint remover increases with its concentration. High concentrations are usually impractical, but lower concentrations reduce the effectiveness of the paint removal. Additives could be added to the hydrogen peroxide in order to try to improve the effectiveness, but it is difficult to find additives that are stable when mixed with it.

We have now devised an improved paint remover formulation which is very effective in use, which is less acidic and less odorous than the formulations described in EP-B-0497130, and which is more stable than the formulations described in US-A-3355385.

According to the present invention, we provide a paint remover formulation comprising a mixture of hydrogen peroxide and a paint removal accelerator, said paint removal accelerator comprising benzyl alcohol or a functional derivative thereof.

The functional derivative of benzyl alcohol may be any alcoholic substituted derivative of benzyl alcohol, for example, methylbenzyl alcohol, including the four methylbenzyl alcohol isomers. In the following description we use the expression "benzyl alcohol" to include the functional derivatives.

We have found that the combination of hydrogen peroxide, with one or more of the accelerators specified above, provides paint removal that is more effective than using hydrogen peroxide alone, or using the accelerator alone. Furthermore, we have been able to produce stable formulations of hydrogen peroxide and the accelerators.

The amount of hydrogen peroxide in the formulation should be as high as possible. In practice, it would be difficult to use more than 60 wt% hydrogen peroxide in the formulation, due to the difficulty of obtaining supplies. Furthermore, considerations of safety and stability will usually limit the amount of hydrogen peroxide to a maximum of 30 wt% of the total formulation. The minimum amount of hydrogen peroxide could be as low as 1.5 wt%, but we prefer to use over 10 wt% hydrogen peroxide. We have found that a good balance of paint removal, safety and stability can be achieved when the formulation contains from 15 to 25 wt% hydrogen peroxide, and the best results can be achieved using 18 to 20 wt% hydrogen peroxide.

The accelerator may be provided in an amount of 2.5 to 40 wt%, although there would usually be at least 5 wt% of the accelerator. We have obtained the best results when using from 5 to 25 wt% accelerator, more preferably from 10 to 25 wt% accelerator.

It is possible to make useful formulations having less hydrogen peroxide than accelerator. In general, the amount of hydrogen peroxide in the formulations of the invention should be at least half, usually at least 70%, of the amount of the accelerator, on a weight basis. Our best formulations contain at least as much hydrogen peroxide as accelerator, on a weight basis. Preferably, the formulations according to the invention contain at least 1.2 times, preferably at least 1.5 times, as much hydrogen peroxide as accelerator. In general, the formulations according to the invention would be unlikely to contain more than 8 times as much hydrogen peroxide as accelerator, on a weight basis. Preferably, the formulations according to the invention do not contain more than 4 times as much hydrogen peroxide as accelerator. In the preferred embodiment, we use between 1.5 and 3.0 times as much hydrogen peroxide as benzyl alcohol, on a weight basis.

In order to produce the best results it is necessary for the mixture of the hydrogen peroxide and the accelerator to be provided in the form of an emulsion. In general, the greater the stability of this emulsion, the longer the shelf-life of the formulation.

The remainder of the formulation may comprise additives and/or water. Some of the ingredients (eg hydrogen peroxide) are normally supplied as an aqueous solution, which reduces the amount of extra water that it is necessary to add. The amount of hydrogen peroxide specified above relates to the amount pure hydrogen peroxide, not to the amount of the aqueous solution. In general, over 50 wt% of the formulation is water, usually 50 to 70 wt%.

It is very desirable that the formulation also includes a surfactant. The accelerator is immiscible with the hydrogen peroxide solution, and the surfactant serves the primary function of assisting the formation of a stable emulsion of the accelerator with the hydrogen peroxide solution. The surfactant also serves the function of helping with the wetting of the paint during the application of the paint remover formulation.

Acrylic acid copolymers are very useful as surfactants, especially the acrylic acid copolymer sold under the trade name PEMULEN 1622 by the B.F. Goodrich Company. We have also found that sodium lauryl sarcosinate is very useful as a surfactant. Another useful surfactant is C₁₂ to C₁₄ alkyldimethylamine oxide. The surfactant is preferably present in an amount of 0.5 to 15 wt %, more preferably 2 to 10 wt%, most preferably 4 to 8 wt%, as 100% active surfactant.

It is usually preferable for the formulation according to the invention to include a thickening agent. This is particularly desirable when the formulation is to be applied by brush, roller or spray. The thickening agent may be organic or inorganic. As an organic thickening agent, we prefer to use either cellulose ether or polyacrylate materials; acrylic acid copolymers are particularly useful as a thickening agents. One especially useful acrylic acid copolymer is the PEMULEN 1622 mentioned above, which can also serve as a surfactant. However, in general, we prefer inorganic thickeners over acrylic acid copolymers, because they greatly reduce the flammability of paint treated with the formulation, and they give greater long term viscosity stability, since they are not prone to degradation by hydrogen peroxide. Particularly preferred inorganic thickeners are amorphous silica and hydrous sodium lithium magnesium silicate.

The thickening agent is preferably present in an amount from 0.4 to 10 wt%. When the thickening agent is an organic thickening agent, then it is preferably present in an amount from 0.4 to 5 wt%. When the thickening agent is an inorganic thickening agent, then it is preferably present in an amount from 1 to 10 wt%, more preferably 1.5 to 7 wt%.

The presence of the surfactant and the thickening agent make it possible to add the accelerator to the rest of the formulation some time after it has been formed. This can help to improve the shelf life of the formulation, because accelerator may degrade after several months storage, particularly in hot climates.

It is desirable that the formulation according to the invention contains a sequestrant for iron. The purpose of the sequestrant is to take up any iron that may inadvertently enter the formulation during manufacture or use. The sequestrant is preferably present in an amount over 0.05 wt%, more preferably from 0.05 to 0.5 wt%, most preferably from 0.05 to 0.3 wt%. The sequestrant is suitably sodium diethylenetriaminepentaacetate.

The formulation may also include a pH adjuster. The pH adjuster can be used to adjust the pH to within the range 1 to 9. The pH adjuster may be, for example, triethanolamine or monoethanolamine. Sodium lauryl sarcosinate is useful as a pH adjuster.

The formulation may also include a corrosion inhibitor. We have found that sodium lauryl sarcosinate is useful as a corrosion inhibitor for steel. Thus, the sodium lauryl sarcosinate can simultaneously act as a surfactant, a pH adjuster and a corrosion inhibitor.

The formulation may also include mineral oil to retard evaporation. This may be useful when an article to be treated is immersed in the paint remover formulation in a tank. The mineral oil should have a density less than the density of the rest of the formulation, should be immiscible with the rest of the formulation, and should not be permanently emulsified with the rest of the formulation. This enables the mineral oil to separate from the rest of the formulation in the tank, and to form a surface layer that retards evaporation of the rest of the formulation.

It is preferred that the formulations according to the invention contain substantially no methylene chloride.

The more useful formulations according to the invention have the following composition:

| | |
|---|---|
| Hydrogen peroxide | 15 to 25 wt% |
| Benzyl alcohol | 5.0 to 25 wt% |
| Thickener | 0.4 to 10 wt% |
| Surfactant | 2.0 to 10 wt% |
| Sequestrant | 0.05 to 0.5 wt% |
| Water | to 100 wt% |

The most useful formulations according to the invention have the following composition:

| | |
|---|---|
| Hydrogen peroxide | 18 to 20 wt% |
| Benzyl alcohol | 10 to 25 wt% |
| Thickener | 0.4 to 7.0 wt% |
| Surfactant | 4.0 to 6.0 wt% |
| Sequestrant | 0.05 to 0.3 wt% |
| Water | to 100 wt% |

The paint remover formulation according to the invention is effective against most organic coatings and paints, including the resilient coatings typically applied to aircraft surfaces.

The formulation according to the invention can be made simply by simple blending processes, and we have found that it is not necessary to use a high shear mixer. As mentioned above, it is sometime preferable to blend in the accelerator after blending the other ingredients. The accelerator may be supplied separately from the other ingredients, so that the two can be mixed shortly before application to paint.

According to another aspect of the invention there is provided the use of a formulation described above as a paint remover.

According to a further aspect of the invention there is provided a method of removing paint, comprising applying to the paint a paint remover formulation as described above.

In order that the invention may be more thoroughly understood, the following examples are given by way of example only.

### Example 1

A paint remover formulation was prepared by mixing together the following components in the amounts specified.

| | |
|---|---|
| Hydrogen Peroxide | 21.0 wt% |
| Benzyl alcohol | 24.0 wt% |
| Polyacrylic acid copolymer | 0.9 wt% |
| Triethanolamine | 0.1 wt% |
| Water | 54.0 wt% |

### Example 2

A paint remover formulation was prepared by mixing together the following components in the amount specified.

| | |
|---|---|
| Hydrogen peroxide | 19.1 wt% |
| Benzyl alcohol | 11.0 wt% |
| C₁₂ to C₁₄ alkyldimethylamine oxide | 3.1 wt% |
| Sodium lauryl sarcosinate | 3.1 wt% |
| Amorphous silica | 5.0 wt% |
| Sodium diethylenetriaminepentaacetate | 0.2 wt% |
| Water | 58.5 wt% |

### Example 3

A paint remover formulation was prepared by mixing together the following components in the amount specified.

| | |
|---|---|
| Hydrogen peroxide | 19.3 wt% |
| Benzyl alcohol | 12.0 wt% |
| Sodium lauryl sarcosinate | 5.4 wt% |
| Hydrous sodium lithium magnesium silicate | 1.5 wt% |
| Sodium diethylenetriaminepentaacetate | 0.2 wt% |
| Water | 61.6 wt% |

The hydrous sodium lithium magnesium silicate was mixed with as much of the water as possible, and was then allowed to form a gel. The resultant gel was then added to a mixture of the other ingredients, with stirring.

It will be appreciated that modifications may be made to the invention described above, within the scope of the appended claims.

## Claims

1. According to the present invention, we provide a paint remover formulation comprising a mixture of hydrogen peroxide and a paint removal accelerator, said paint removal accelerator comprising benzyl alcohol or a functional derivative thereof.

2. A paint remover formulation according to claim 1, comprising hydrogen peroxide in the range 1.5 to 30 wt%.

3. A paint remover formulation according to claim 1 or 2, comprising an amount of the accelerator in the range 2.5 to 40 wt%

4. A paint remover formulation according to claim 1,2 or 3, comprising 5 to 25 wt% benzyl alcohol and 15 to 25 wt% hydrogen peroxide.

5. A paint remover formulation according to claim 1, 2 or 3, comprising 10 to 25 wt% benzyl alcohol and 18 to 20 wt% hydrogen peroxide.

6. A paint remover formulation according to any preceding claim, comprising between 0.7 and 3.0 times as much hydrogen peroxide, by weight, as accelerator.

7. A paint remover formulation according to any preceding claim, comprising between 1.5 and 3.0 times as much hydrogen peroxide, by weight, as accelerator.

8. A paint remover formulation according to any preceding claim, further comprising an organic or inorganic thickening agent.

9. A paint remover formulation according to any preceding claim, further comprising a surfactant.

10. A paint remover formulation according to claim 9, comprising 4 to 8 wt% of the surfactant.

11. A paint remover formulation according to any preceding claim, further comprising a sequestrant for iron.

12. A paint remover formulation according to claim 11, comprising 0.05 to 0.5 wt% of the sequestrant.

13. A paint remover formulation according to any preceding claim, further comprising water.

14. A paint remover formulation according to claim 13, comprising over 50 wt% water.

15. A paint remover formulation according to claim 1, comprising the following composition:
| | |
|---|---|
| Hydrogen peroxide | 15 to 25 wt% |
| Benzyl alcohol | 5.0 to 25 wt% |
| Thickener | 0.4 to 10 wt% |
| Surfactant | 2.0 to 10 wt% |
| Sequestrant | 0.05 to 0.5 wt% |
| Water | to 100 wt% |

16. A paint remover formulation according to claim 1, comprising the following composition:
| | |
|---|---|
| Hydrogen peroxide | 18 to 20 wt% |
| Benzyl alcohol | 10 to 25 wt% |
| Thickener | 0.4 to 7.0 wt% |
| Surfactant | 4.0 to 8.0 wt% |
| Sequestrant | 0.05 to 0.3 wt% |
| Water | to 100 wt% |

17. The use of a paint remover formulation according to any preceding claim as a paint remover.

18. A method of removing paint or other organic coating, comprising applying to the paint, or other organic coating, a paint remover formulation according to any preceding claim.

## Patentansprüche

1. Gemäß der vorliegenden Erfindung stellen wir eine Lackentfernungsformulierung bereit, umfassend ein Gemisch aus Wasserstoffperoxid und einem Lackentfernungsbeschleuniger, wobei der genannte Lackentfernungsbeschleuniger Benzylalkohol oder ein Funktionsderivat davon beinhaltet.

2. Lackentfernungsformulierung nach Anspruch 1, umfassend Wasserstoffperoxid im Bereich von 1,5 bis 30 Gew.-%.

3. Lackentfernungsformulierung nach Anspruch 1 oder 2, umfassend eine Menge an Beschleuniger im Bereich von 2,5 bis 40 Gew.-%.

4. Lackentfernungsformulierung nach Anspruch 1, 2 oder 3, umfassend 5 bis 25 Gew.-% Benzylalkohol und 15 bis 25 Gew.-% Wasserstoffperoxid.

5. Lackentfernungsformulierung nach Anspruch 1, 2 oder 3, umfassend 10 bis 25 Gew.-% Benzylalkohol und 18 bis 20 Gew.-% Wasserstoffperoxid.

6. Lackentfernungsformulierung nach einem der vorherigen Ansprüche, umfassend einen 0,7 bis 3,0 mal höheren Gewichtsanteil an Wasserstoffperoxid als an Beschleuniger.

7. Lackentfernungsformulierung nach einem der vorherigen Ansprüche, umfassend einen 1,5 bis 3,0 mal höheren Gewichtsanteil an Wasserstoffperoxid als an Beschleuniger.

8. Lackentfernungsformulierung nach einem der vorherigen Ansprüche, ferner umfassend ein organisches oder anorganisches Verdickungsmittel.

9. Lackentfernungsformulierung nach einem der vorherigen Ansprüche, ferner umfassend ein Tensid.

10. Lackentfernungsformulierung nach Anspruch 9, umfassend 4 bis 8 Gew. -% des Tensids.

11. Lackentfernungsformulierung nach einem der vorherigen Ansprüche, ferner umfassend ein Maskierungsmittel für Eisen.

12. Lackentfernungsformulierung nach Anspruch 11, umfassend 0,05 bis 0,5 Gew.-% des Maskierungsmittels.

13. Lackentfernungsformulierung nach einem der vorherigen Ansprüche, ferner umfassend Wasser.

14. Lackentfernungsformulierung nach Anspruch 13, umfassend mehr als 50 Gew.-% Wasser.

15. Lackentfernungsformulierung nach Anspruch 1, umfassend die folgende Zusammensetzung:
| | |
|---|---|
| Wasserstoffperoxid | 15 bis 25 Gew.-% |
| Benzylalkohol | 5,0 bis 25 Gew.-% |
| Verdickungsmittel | 0,4 bis 10 Gew.-% |
| Tensid | 2,0 bis 10 Gew.-% |
| Maskierungsmittel | 0,05 bis 0,5 Gew.-% |
| Wasser | Rest bis 100 Gew.-% |

16. Lackentfernungsformulierung nach Anspruch 1, umfassend die folgende Zusammensetzung:
| | |
|---|---|
| Wasserstoffperoxid | 18 bis 20 Gew.-% |
| Benzylalkohol | 10,0 bis 25 Gew.-% |
| Verdickungsmittel | 0,4 bis 7,0 Gew.-% |
| Tensid | 4,0 bis 8,0 Gew.-% |
| Maskierungsmittel | 0,05 bis 0,3 Gew.-% |
| Wasser | Rest bis 100 Gew.-% |

17. Verwendung einer Lackentfernungsformulierung nach einem der vorherigen Ansprüche als Lackentferner.

18. Verfahren zum Entfernen von Lack oder einer anderen organischen Beschichtung, umfassend das Auftragen einer Lackentfernungsformulierung nach einem der vorherigen Ansprüche auf den Lack oder eine andere organische Beschichtung.

## Revendications

1. Formulation de décapant de peinture, fournie selon la présente invention, comprenant un mélange de peroxyde d'hydrogène et d'un accélérateur de décapage de peinture, ledit accélérateur de décapage de peinture comprenant l'alcool benzylique ou un dérivé fonctionnel de celui-ci.

2. Formulation de décapant de peinture selon la revendication 1, comprenant du peroxyde d'hydrogène dans la plage entre 1,5 et 30% en poids.

3. Formulation de décapant de peinture selon la revendication 1 ou 2, comprenant une quantité de l'accélérateur dans la plage entre 2,5 et 40% en poids.

4. Formulation de décapant de peinture selon la revendication 1, 2 ou 3, comprenant de 5 à 25% en poids d'alcool benzylique et de 15 à 25% en poids de peroxyde d'hydrogène.

5. Formulation de décapant de peinture selon la revendication 1, 2 ou 3, comprenant de 10 à 25% en poids d'alcool benzylique et de 18 à 20% en poids de peroxyde d'hydrogène.

6. Formulation de décapant de peinture selon l'une quelconque des revendications précédentes, comprenant entre 0,7 et 3,0 fois plus de peroxyde d'hydrogène, en poids, que d'accélérateur.

7. Formulation de décapant de peinture selon l'une quelconque des revendications précédentes, comprenant entre 1,5 et 3,0 fois plus de peroxyde d'hydrogène, en poids, que d'accélérateur.

8. Formulation de décapant de peinture selon l'une quelconque des revendications précédentes, comprenant en outre un agent épaississant organique ou minéral.

9. Formulation de décapant de peinture selon l'une quelconque des revendications précédentes, comprenant en outre un agent tensioactif.

10. Formulation de décapant de peinture selon la revendication 9, comprenant de 4 à 8% en poids de l'agent tensioactif.

11. Formulation de décapant de peinture selon l'une quelconque des revendications précédentes, comprenant en outre un agent séquestrant pour le fer.

12. Formulation de décapant de peinture selon la revendication 11, comprenant de 0,05 à 0,5% en poids de l'agent séquestrant.

13. Formulation de décapant de peinture selon l'une quelconque des revendications précédentes, comprenant en outre de l'eau.

14. Formulation de décapant de peinture selon la revendication 13, comprenant plus de 50% en poids d'eau.

15. Formulation de décapant de peinture selon la revendication 1, comprenant la composition suivante:
| | |
|---|---|
| Peroxyde d'hydrogène | 15 à 25% en poids |
| Alcool benzylique | 5,0 à 25% en poids |
| Agent épaississant | 0,4 à 10% en poids |
| Agent tensioactif | 2,0 à 10% en poids |
| Agent séquestrant | 0,05 à 0,5% en poids |
| Eau | qsp 100% |

16. Formulation de décapant de peinture selon la revendication 1, comprenant la composition suivante:
| | |
|---|---|
| Peroxyde d'hydrogène | 18 à 20% en poids |
| Alcool benzylique | 10 à 25% en poids |
| Agent épaississant | 0,4 à 7,0% en poids |
| Agent tensioactif | 4,0 à 8,0% en poids |
| Agent séquestrant | 0,05 à 0,3% en poids |
| Eau | qsp 100% |

17. Utilisation d'une formulation de décapant de peinture selon l'une quelconque des revendications précédentes comme décapant de peinture.

18. Méthode de décapage de peinture ou d'un autre revêtement organique, comprenant l'application sur la peinture, ou sur un autre revêtement organique, d'une formulation de décapant de peinture selon l'une quelconque des revendications précédentes.
